# EUROPEAN PATENT SPECIFICATION

(11) **EP 1 149 720 B1**
(45) Date of publication and mention of the grant of the patent: **17.10.2007**
(21) Application number: 01201408.0
(22) Date of filing: 18.04.2001
(51) Int. Cl.: B60J 7/06

(54) **Folding roof for a vehicle**
Faltbares Fahrzeugdach
Toit pliant pour véhicule

(30) Priority: 27.04.2000 NL 1015037
(43) Date of publication of application: 31.10.2001
(73) Proprietor: Inalfa Roof Systems Group B.V., 5804 AH Venray (NL)
(72) Inventor: De Margueron, Philippe, 78740 Saint Remy, Les Chevreux (FR)
(74) Representative: Metman, Karel Johannes

(56) References cited:
- EP-A- 0 379 821
- EP-A- 0 897 821
- US-A- 1 860 463
- US-A- 1 950 371

## Description

The invention relates to a folding roof in accordance with the preamble of claim 1, which is disclosed in US 1 860 463 A.

Such folding roofs are known in many versions thereof, for example from EP-B-0 606 730. The closure element of such folding roofs is mainly formed of a (canvas) cloth, to which further flexible layers may have been added for insulation purposes, for example, as well as an interior liner. One drawback of such folding roofs is that vehicles fitted with such folding roofs are more liable to being burglarized than vehicles fitted with open roof constructions comprising glass panels, for example, since the fabric of the folding roof is easy to cut open.

The object of the invention is to provide a simplified, alternative folding roof of the kind referred to in the introduction.

In order to accomplish that objective, the folding roof according to the invention comprises the features defined in the characterizing portion of claim 1.

The use of a reinforcement, such as reinforcing sheets, provides a barrier that prevents the roof being cut open, thus making it much more difficult to burglarize a vehicle via the folding roof. Since the reinforcing sheets or the like are present on the underside of the cloth, the appearance of the folding roof is not affected. On the contrary, the use of the reinforcement, such as reinforcing sheets, according to the invention even makes it possible to obtain a much smoother appearance of the folding roof, especially in the closed position of the closure element.

It is noted that the use of flat reinforcing elements or plates for folding roofs is known per se from DE-C 196 47 730, but the reinforcing sheets used therein function to support solar cells. For this reason, in said prior art folding roof, the reinforcing sheets are present on the upper side of the cloth. It will be apparent that this affects the appearance of the folding roof to a considerable degree.

The folding means of the closure element may consist, for example, of supporting arches or ribs which extend in transverse direction under the cloth and which are supported at their ends. Said supporting arches or ribs may provide support for the cloth in the areas between the reinforcing sheets, and they determine the way in which the cloth is folded. In addition thereto, or possibly instead thereof, a material which can be folded but which cannot be cut, such as a metal wire mesh, may be fixed to the underside of the cloth of the closure element in the areas between the reinforcing sheets. Thus, a barrier preventing the cloth from being cut is provided over the entire area of the cloth. Especially in this embodiment it would also be possible to leave out the ribs. In that case the reinforcing sheets will be present in those areas where there is no folding line. It is noted that it is possible in accordance with the invention to form at least substantially the entire cloth of the material that cannot be pierced or cut, so that an adequate protection against burglary is obtained after all without using reinforcing sheets.

The invention will now be explained in more detail with reference to the drawings, which show a few exemplary embodiments of the folding roof according to the invention.
Fig. 1 is a schematic top plan view of a vehicle roof fitted with a first embodiment of the folding roof according to the invention.
Fig. 2 is a larger-scale, partial sectional view along line II-II in Fig. 1.
Fig. 3 is a sectional view corresponding to Fig. 2 of a second embodiment of the folding roof according to the invention.
Fig. 4 is a sectional view comparable with Figures 2 and 3 of another variant of the folding roof according to the invention.
Fig. 5 is a cross-sectional view of a larger part of the closure element of the folding roof of Fig. 4 in the folded position thereof.

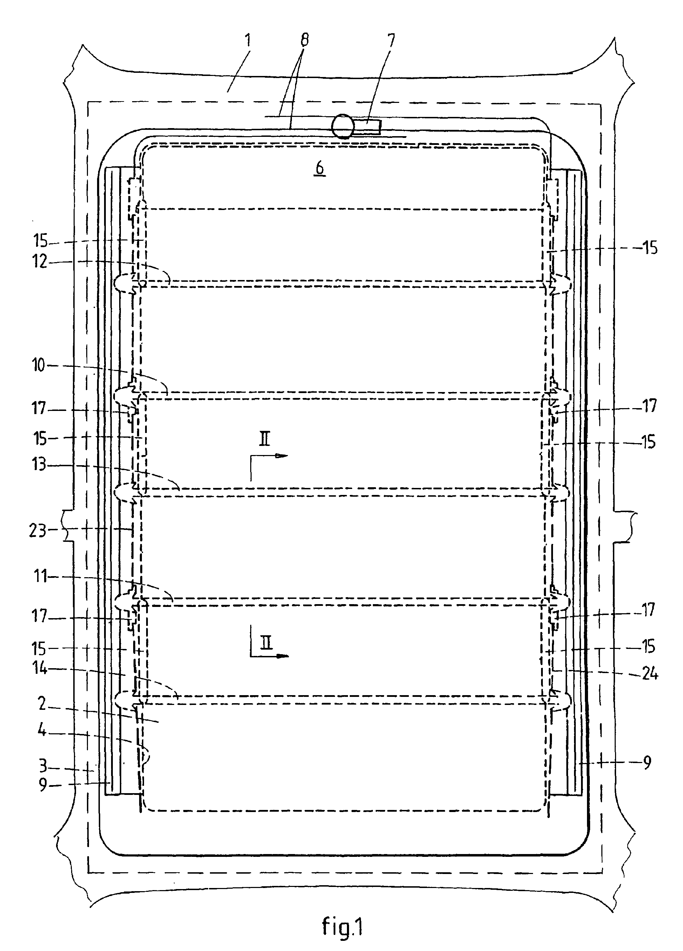

Fig. 1 shows a fixed roof of a vehicle, in particular a passenger car, which is provided with a roof opening 2 for receiving a folding roof. The folding roof comprises a stationary part, in this embodiment in the form of a frame 3, which is fixed to the fixed roof 1 and which circumferentially bounds an opening 4 of the folding roof.

Opening 4 can be selectively closed or opened by means of a foldable closure element 5. In the illustrated embodiment, closure element 5 is fixed to the frame on the rear side of the vehicle, and on its front side closure element 5 is connected to an operating beam 6 or the like. Operating beam 6 can be moved by means of an operating mechanism, which is driven by means of an electric motor 7 and driving cables 8 in this embodiment. This aspect will not be discussed in more detail herein. Operating beam 6 is guided at both ends, via sliding shoes, in guide rails 9 which extend in the longitudinal direction of the vehicle on either side of opening 4.

In order to ensure that the folding of the closure element 5 takes place in a controlled manner when the folding roof is being opened, the foldable closure element 5 is supported by a number of supporting arches or ribs 10, 11 of a first type and three ribs 12, 13, 14 of a second type. The second supporting arches 12, 13, 14 are vertically movable or free ribs, whilst ribs 10, 11 are only capable of movement on slides in guide rails 9. This construction is known per se, for example from EP-B-0 606 730.

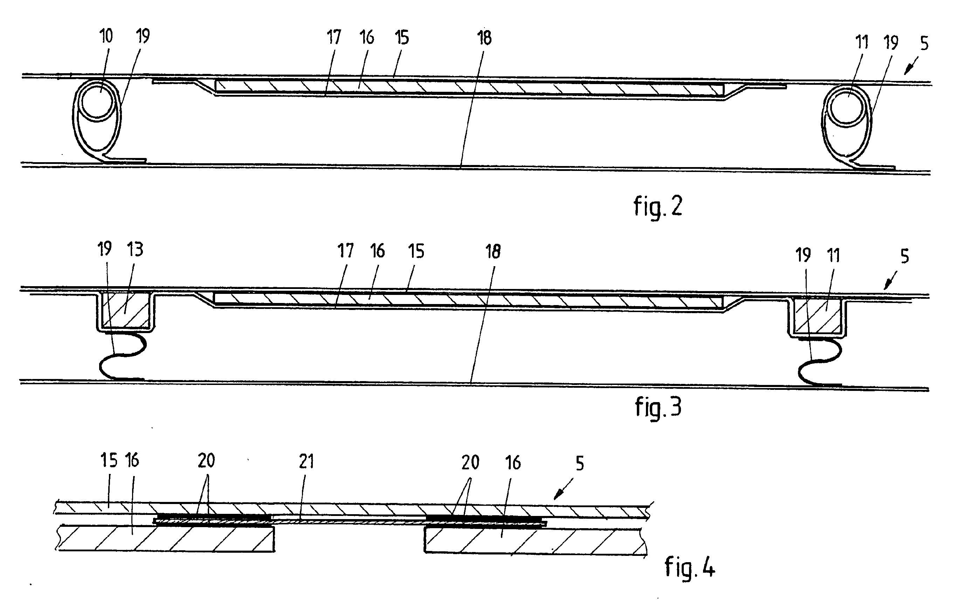

Fig. 2 shows that closure element 5 comprises a number of layers. The main component of the closure element 5 is a cloth 15 of a strong (fabric) material, such as polystyrene or polypropylene with a fibre mat reinforcement, such as glass fibre or Dyneema^{®}. All kinds of other materials are also possible, of course.

According to the invention, reinforcing sheets 16 are present in the areas between the ribs 10 - 14 or the folding lines defined thereby, which reinforcing sheets are fixed to the underside of the cloth 15 of the closure element 5, and that in such a manner that the upper side of the cloth 15 of the closure element 5 forms a continuous, taut surface between ribs 10 - 14 in a closed position.

In this first embodiment a further layer in the form of a lower covering 17 is provided in the areas between ribs 10 - 14 or between the folding lines defined thereby, which covering is fixed to cloth 15 at the edges, near the ribs, in such a manner that a respective reinforcing sheet 16 can be disposed between cloth 15 and lower covering 17. Reinforcing sheet 16 may be accommodated loosely between covering 17 and cloth 15 or, for example, be glued or welded to cloth 15 and/or to the lower covering 17.

Reinforcing sheets 16 may be made of any sufficiently stiff, plastic material that cannot be cut, but it is also possible, for example, to use a sandwich material comprising metal outer layers and an intermediate layer of plastic material. Preferably, the reinforcing sheets 16 are biased or preformed to conform to the convexity of the intended vehicle roof, as a result of which the closure element will automatically adapt to the shape of the vehicle roof in the areas between ribs 10 - 14.

In the embodiment according to Fig. 2, the closure element 5 furthermore comprises an interior liner 18, which is suspended from ribs 10 - 14, some distance below cloth 15, by means of special suspension elements 19. Insulating material may be present between interior liner 18, which is intended to make the underside of the closure element 5 look more attractive, and cloth 15.

Fig. 3 shows a variant of an embodiment wherein the lower covering 17 extends along the entire length of cloth 15, past the ribs 10 - 14, which are shaped differently in this embodiment. Also the suspension elements 19 have a different shape in this embodiment.

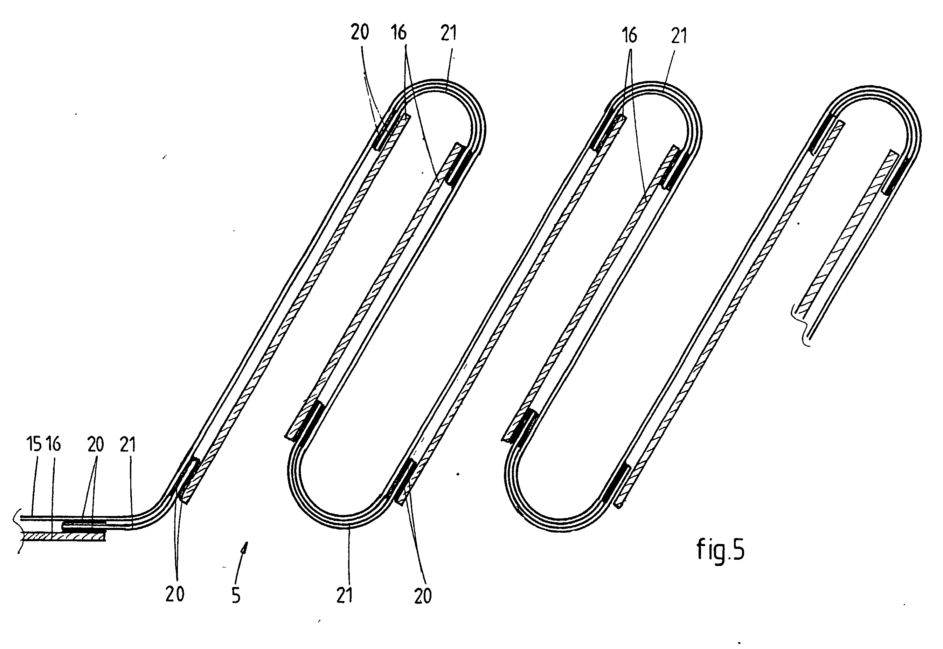

Figs. 4 and 5 show a final embodiment, wherein no ribs are used. It would be possible to use ribs, to be sure, but owing to the stiffness which the reinforcing sheets 16 impart to the closure element 5, it would also be possible to use folding means which are only positioned on the side edges of closure element 5, with the preformed reinforcing sheets 16 defining the shape of the closure element in the closed position of the folding roof.

Nor does this embodiment comprise a lower covering 17 and an interior liner 18, whilst the reinforcing sheets 16 are fixed to cloth 15 by means of welding strips 20. The reinforcing sheets 16, which are made of a polycarbonate plastic material, are not fixed directly to cloth 15 in the illustrated embodiment, but via fine metal wire mesh 21, which extends in the areas between the reinforcing sheets 16 and which overlaps said reinforcing sheets 16 at the edges. The welding strips 20 are fitted on either side of the metal wire mesh 21 in that case. The width of welding strips 20 is such that an adequate connection is provided, wherein the presence of welding traces on the outside of cloth 15 is hardly visible, if at all. Preferably, high-frequency welding is used, but also other welding methods are possible, of course.

The metal wire mesh parts 21 are fine-meshed and formed in such a manner that they constitute a barrier that prevents the cloth from being pierced with sharp objects, such as knives, so that the closure element 5 is protected against being cut over its entire area, thus providing adequate protection against burglary. Alternatively, a fabric may be used, for example a fabric made of a metal or a superstrong fibre, such as aramid (Kevlar^{®}),

From the foregoing it will be apparent that the invention provides a folding roof which is remarkable for its resistance to burglary. Furthermore the invention imparts a great sense of quality to folding roof, whilst the appearance of the folding roof, both in the closed position and in the open position, can be very smooth. Folding wrinkles are avoided. Furthermore, wind noise and flapping are reduced and a more stable shape is obtained, in particular at the edges. In the closed position of the closure element, an improved seal against the vehicle roof is provided.

The invention is not restricted to the above-described embodiments as shown in the drawing, which can be varied in several ways without departing from the scope of the invention. Thus it would be possible, for example, to use only one continuous reinforcing sheet, which can be folded in a number of places so as to enable folding of the closure element. It is also conceivable to fit the aforesaid pierce-resistant fabric, mesh or similar rigid reinforcement over at least substantially the entire area of the roof opening or of the cloth, instead of using said single sheet. In this manner protection against burglary is likewise provided, whilst the weight remains as low as possible and the appearance is affected as little as possible. Preferably, the reinforcement is such that it hardly interferes with the folding of the roof, if at all, and a tautly stretched cloth is obtained in the closed position.

## Claims

1. A folding roof for a vehicle having an opening (2) in its fixed roof (1), comprising a stationary part (3) to be fixed to the roof, an adjustable, foldable closure element (5) supported by said stationary part, which is adjustable between a closed position, in which it closes the roof opening, and an open position, in which it releases the roof opening at least partially, which closure element comprises a cloth (15) of a strong material, which is fixed to a rigid transverse member (6, 3) on the front and on the rear side, wherein the cloth is supported, at least at the side edges, by movably guided folding means (10, 14), which determine the manner in which the closure element (5) is folded, a reinforcement, such as reinforcing sheets (16), is provided at least in the areas between the folding lines defined by the folding means (10 - 14), seen in the longitudinal direction of the folding roof, which reinforcing sheets are positioned on the underside of the cloth (15) of the closure element (5), in such a manner that the upper side of the closure element forms a continuous, taut surface in the closed position, **characterized in that** the reinforcing sheets are spaced apart from the folding lines.

2. A folding roof according to claim 1, wherein a lower covering (17) is present under the cloth, at least in areas between the folding lines defined by the folding means (10 - 14), which covering is fixed to the cloth (15) at least at the edges, whilst the reinforcing sheets (16) are disposed between said cloth and said covering.

3. A folding roof according to claim 1 or 2, wherein the reinforcing sheets (16) are fixed to the underside of the cloth (15), preferably by welding or glueing.

4. A folding roof according to claim 3, wherein said reinforcing sheets are fixed to the cloth (15) by means of welding strips (20), preferably by high-frequency welding.

5. A folding roof according to any one of the preceding claims, wherein an interior liner (18) is provided, which is preferably fixed to said folding means (10 - 14) and which extends at some distance from the cloth (15).

6. A folding roof according to any one of the preceding claims, wherein said reinforcing sheets (16) are formed of a rigid plastic material.

7. A folding roof according to any one of the preceding claims, wherein said reinforcing sheets (16) are formed in a sandwich structure, preferably with metal outside layers and an intermediate layer of plastic material.

8. A folding roof according to any one of the preceding claims, wherein said reinforcing sheets (16) are biassed to conform to the convexity of the intended vehicle roof (1).

9. A folding roof according to any one of the preceding claims, wherein a material (21) which can be folded but which cannot be cut, such as a mesh or a fabric of a metal or a superstrong fibre material, is fixed to the underside of the cloth (15) of the closure element.

10. A folding roof according to any one of the preceding claims, wherein said cloth (15) is made of a non-transparent fabric material, for example a fibre-reinforced plastic.

11. A folding roof according to any one of the preceding claims, wherein said folding means (10 - 15) comprise ribs extending in transverse direction, which are movably guided at their ends.

12. A folding roof according to any one of the preceding claims, wherein said rigid cross member (6) on the opening side of the folding roof is an operating beam, which is guided at its ends, via sliding shoes, in guide rails (9) extending in the longitudinal direction of the folding roof on either side of the roof, whilst driving means, in particular driving cables (8) engage the operating beam so as to move the operating beam for the purpose of opening and closing the folding roof.

13. A folding roof for a vehicle having an opening (2) in its fixed roof (1), comprising a stationary part (3) to be fixed to the roof, an adjustable, foldable closure element (5) supported by said stationary part, which is adjustable between a closed position, in which it closes the roof opening, and an open position, in which it releases the roof opening at least partially, which closure element comprises a cloth (15) of a strong material, which is fixed to a rigid transverse member (6, 3) on the front and on the rear side, wherein the cloth is supported, at least at the side edges, by movably guided folding means (10, 14), which determine the manner in which the closure element (5) is folded, a foldable reinforcement of a pierce-resistant material being fixed to the underside of the cloth (15) of the closure element (5) over at least substantially the entire area of the cloth, in such a manner that the upper side of the closure element forms a continuous, taut surface in the closed position, **characterized in that** a material (21) which can be folded but which cannot be cut, such as a mesh or a fabric of a metal or a superstrong fibre material, is fixed to the underside of the cloth (15) of the closure element.

## Patentansprüche

1. Faltdach für ein Fahrzeug mit einer Dachöffnung (2) in dessen Festdach (1), aufweisend einen an dem Dach zu befestigenden stationären Teil (3), ein verstellbares, faltbares, von dem stationären Teil gestütztes Schließelement (5), welches zwischen einer Schließposition, in welcher es die Dachöffnung schließt, und einer Offenposition verstellbar ist, in welcher es die Dachöffnung wenigstens teilweise freigibt, welches Schließelement einen Stoff (15) aus einem widerstandsfähigen Material aufweist, welcher an einem starren Querelement (6, 3) an der Front- und an der Heckseite befestigt ist, wobei der Stoff wenigstens an den Seitenrändern von bewegbar geführten Faltmitteln (10, 14) gestützt wird, welche die Art und Weise bestimmen, auf welche das Schließelement (5) gefaltet wird, eine Verstärkung, wie Verstärkungslagen (16), die mindestens in den Bereichen zwischen den Faltlinien, die von den Faltmitteln (10 - 14) gesehen in Längsrichtung des Faltdaches definiert werden, vorgesehen ist, welche Verstärkungslagen auf der Unterseite des Stoffes (15) des Schließelements (5) auf eine derartige Art und Weise positioniert sind, dass die Oberseite des Schließelements eine kontinuierliche, fest gespannte Fläche in der Schließposition ausbildet, **dadurch gekennzeichnet, dass** die Verstärkungslagen im Abstand zu den Faltlinien angeordnet sind.

2. Faltdach gemäß Anspruch 1, wobei eine untere Abdeckung (17) unter dem Stoff wenigstens in Bereichen zwischen den Faltlinien vorhanden ist, die von den Faltmitteln (10 - 14) definiert sind, welche Abdeckung an dem Stoff (15) wenigstens an den Rändern befestigt ist, wobei die Verstärkungslagen (16) zwischen dem Stoff und der Abdeckung angeordnet sind.

3. Faltdach gemäß Anspruch 1 oder 2, wobei die Verstärkungslagen (16) an der Unterseite des Stoffes (15) vorzugsweise durch Schweißen oder durch Kleben befestigt sind.

4. Faltdach gemäß Anspruch 3, wobei die Verstärkungslagen an dem Stoff (15) mittels Schweißstreifen (20), vorzugsweise mittels Hochfrequenzschweißen, befestigt sind.

5. Faltdach gemäß einem der vorherigen Ansprüche, wobei eine Inneneinlage (18) vorgesehen ist, welche vorzugsweise an den Faltmitteln (10 - 14) befestigt ist und welche sich mit etwas Abstand zum Stoff (15) erstreckt.

6. Faltdach gemäß einem der vorherigen Ansprüche, wobei die Verstärkungslagen (16) aus einem starren Kunststoffmaterial ausgebildet sind.

7. Faltdach gemäß einem der vorherigen Ansprüche, wobei die Verstärkungslagen (16) in einer Sandwich-Struktur, vorzugsweise mit Metallaußenlagen und Kunstzoffmaterial-Zwischenlagen, ausgebildet sind.

8. Faltdach gemäß einem der vorherigen Ansprüche, wobei die Verstärkungslagen (16) vorgespannt sind, so dass sie an die Konvexität des beabsichtigten Fahrzeugdaches (1) angepasst sind.

9. Faltdach gemäß einem der vorherigen Ansprüche, wobei ein Material (21), welches faltbar aber nicht schneidbar ist, wie ein Netz oder ein Gewebe aus einem Metal oder einem superfesten Fasermaterial, an der Unterseite des Stoffes (15) des Schließelements befestigt ist.

10. Faltdach gemäß einem der vorherigen Ansprüche, wobei der Stoff (15) aus einem undurchsichtigen Fasermaterial, beispielsweise einem faserverstärkten Kunststoff, hergestellt ist.

11. Faltdach gemäß einem der vorherigen Ansprüche, wobei die Faltmittel (10 - 15) Rippen aufweisen, die sich in Querrichtung erstrecken und die an ihren Enden bewegbar geführt sind.

12. Faltdach gemäß einem der vorherigen Ansprüche, wobei das starre Querelement (6) auf der offenen Seite des Faltdaches ein Betätigungsträger ist, welcher an seinen Enden über Gleitschuhe in Führungsschienen (9) geführt ist, die sich in Längsrichtung der Faltdach-Öffnung auf beiden Seiten des Daches erstrecken, wobei Antriebsmittel, insbesondere Antriebskabel (8) im Eingriff mit dem Betätigungsträger stehen, so dass der Betätigungsträger zum Zwecke des Öffnens und des Schließens des Faltdaches bewegbar ist.

13. Faltdach für ein Fahrzeug mit einer Dachöffnung (2) in dessen Festdach (1), aufweisend einen an dem Dach zu befestigenden stationären Teil (3), ein verstellbares, faltbares, von dem stationären Teil gestütztes Schließelement (5), welches zwischen einer Schließposition, in welcher es die Dachöffnung schließt, und einer Offenposition verstellbar ist, in welcher es die Dachöffnung wenigstens teilweise freigibt, welches Schließelement einen Stoff (15) aus einem widerstandsfähigen Material aufweist, welcher an einem starren Querelement (6, 3) an der Front- und an der Heckseite befestigt ist, wobei der Stoff wenigstens an den Seitenrändern von bewegbar geführten Faltmitteln (10, 14) gestützt wird, welche die Art und Weise bestimmen, auf welche das Schließelement (5) gefaltete wird, eine faltbare Verstärkung aus einem stechfesten Material, welches an der Unterseite des Stoffes (15) des Schließelements (5) über mindestens im wesentlichen den gesamten Bereich des Stoffes auf eine derartige Art und Weise befestigt ist, dass die Oberseite des Schließelements eine kontinuierliche, fest gespannte Oberfläche in der Schließposition ausbildet, **dadurch gekennzeichnet, dass** ein Material (21), welches faltbar aber nicht schneidbar ist, wie ein Netz oder ein Gewebe aus einem Metall oder einem superfestem Fasermaterial, an der Unterseite des Stoffes (15) des Schließelements befestigt ist.

## Revendications

1. Toit pliant pour véhicule comportant une ouverture (2) dans son toit fixe (1), comprenant une partie stationnaire (3) à fixer sur le toit, un élément de fermeture pliable, ajustable (5) supporté par ladite partie stationnaire, qui est ajustable entre une position fermée, dans laquelle elle ferme l'ouverture de toit, et une position ouverte, dans laquelle elle libère l'ouverture de toit au moins partiellement, lequel élément de fermeture comprend un tissu (15) en matériau robuste, qui est fixé sur un élément transversal rigide (6, 3) sur le côté avant et sur le côté arrière, dans lequel le tissu est supporté, au moins sur les bords latéraux, par des moyens de pliage guidés de façon mobile (10, 14) qui déterminent la manière dans laquelle l'élément de fermeture (5) est plié, un renforcement tel que des feuilles de renforcement (16) sont prévues au moins dans les zones entre les lignes de pliage définies par les moyens de pliage (10, 14) vus dans la direction longitudinale du toit pliant, lesquelles feuilles de renforcement sont positionnées sur le côté inférieur du tissu (15) de l'élément de fermeture (5), de telle manière que le côté supérieur de l'élément de fermeture forme une surface continue, tendue dans la position fermée, **caractérisé en ce que** les feuilles de renforcement sont espacées des lignes de pliage.

2. Toit pliant selon la revendication 1, dans lequel un revêtement inférieur (17) est présent sous le tissu, au moins dans des zones entre les lignes de pliage définies par les moyens de pliage (10 - 14), lequel revêtement est fixé sur le tissu (15) au moins sur les bords, tandis que les feuilles de renforcement (16) sont disposées entre ledit tissu et ledit revêtement.

3. Toit pliant selon la revendication 1 ou 2, dans lequel les feuilles de renforcement (16) sont fixées sur le côté inférieur du tissu (15), de préférence par soudage ou collage.

4. Toit pliant selon la revendication 3, dans lequel lesdites feuilles de renforcement sont fixées sur le tissu (15) au moyen de feuilles de soudage (20), de préférence par soudage haute fréquence.

5. Toit pliant selon l'une quelconque des revendications précédentes, dans lequel est prévue une garniture intérieure (18) qui est de préférence fixée sur lesdits moyens de pliage (10 - 14) et qui s'étend à une certaine distance du tissu (15).

6. Toit pliant selon l'une quelconque des revendications précédentes, dans lequel lesdites feuilles de renforcement (16) sont conformées en un matériau plastique rigide.

7. Toit pliant selon l'une quelconque des revendications précédentes, dans lequel lesdites feuilles de renforcement (16) sont formées d'une structure sandwich, de préférence avec des couches extérieures métalliques et une couche intermédiaire en matériau plastique.

8. Toit pliant selon l'une quelconque des revendications précédentes, dans lequel lesdites feuilles de renforcement (16) sont précontraintes pour s'adapter à la convexité du toit de véhicule prévu (1).

9. Toit pliant selon l'une quelconque des revendications précédentes, dans lequel un matériau (21), qui peut être plié mais ne peut être découpé, tel qu'un matériau à mailles ou un tissu en métal en matériau en fibres extrêmement robustes, est fixé sur le côté inférieur du tissu (15) de l'élément de fermeture.

10. Toit pliant selon l'une quelconque des revendications précédentes, dans lequel ledit tissu (15) est réalisé à partir d'un matériau de tissu non transparent, par exemple un plastique renforcé par des fibres.

11. Toit pliant selon l'une quelconque des revendications précédentes, dans lequel lesdits moyens de pliage (10 - 15) comprennent des nervures s'étendant dans une direction transversale qui sont guidées de façon mobile à leurs extrémités.

12. Toit pliant selon l'une quelconque des revendications précédentes, dans lequel ledit élément transversal rigide (6) sur le côté d'ouverture du toit pliant est une poutre opérante qui est guidée sur ses extrémités, par l'intermédiaire de patins coulissants, dans des rails de guidage (9) s'étendant dans la direction longitudinale du toit pliant de chaque côté du toit, tandis que des moyens d'entraînement, en particulier des câbles de commande (8), coopèrent avec la poutre opérante, de façon à déplacer la poutre opérante afin d'ouvrir et de fermer le toit pliant.

13. Toit pliant pour un véhicule ayant une ouverture (2) dans son toit fixe (1), comprenant une partie stationnaire (3) à fixer sur le toit, un élément de fermeture pliable, ajustable (5) supporté par ladite partie stationnaire qui est ajustable entre une position fermée dans laquelle elle ferme l'ouverture de toit et une position ouverte dans laquelle elle libère l'ouverture de toit au moins partiellement, lequel élément de fermeture comprend un tissu (15) en matériau robuste, qui est fixé sur un élément transversal rigide (6, 3) sur le côté avant et sur le côté arrière, dans lequel le tissu est supporté, au moins sur les bords latéraux, par des moyens de pliage guidés de façon mobile (10, 14) qui déterminent la manière dans laquelle l'élément de fermeture (5) est plié, un renforcement pliable en matériau résistant au perçage étant fixé sur le côté inférieur du tissu (15) de l'élément de fermeture (5) sur au moins sensiblement toute la surface du tissu, de telle manière que le côté supérieur de l'élément de fermeture forme une surface tendue continue dans la position fermée, **caractérisé en ce qu'**un matériau (21), qui peut être plié mais ne peut être découpé, tel qu'un matériau à mailles ou un tissu en métal ou en matériau en fibres extrêmement robustes, est fixé sur le côté inférieur du tissu (15) de l'élément de fermeture.
